# EUROPEAN PATENT SPECIFICATION

(11) **EP 4 375 216 B1**
(45) Date of publication and mention of the grant of the patent: **14.01.2026**
(21) Application number: 22844886.6
(22) Date of filing: 07.04.2022
(51) Int. Cl.: B65D 90/00, B60R 3/00

(54) **TANK-TYPE CONTAINER HANDRAIL CONNECTING ROD ASSEMBLY**
HANDLAUFVERBINDUNGSSTANGENANORDNUNG FÜR TANKCONTAINER
ENSEMBLE TIGE DE LIAISON DE POIGNÉE DE DÉPLACEMENT DE RÉCIPIENT DE TYPE RÉSERVOIR

(30) Priority: 23.07.2021 CN 202121686698 U
(43) Date of publication of application: 29.05.2024
(73) Proprietor: NANTONG TANK CONTAINER CO., LTD., Nantong Jiangsu 226371 (CN)
(72) Inventor: GU, Hongfei, Nantong, Jiangsu 226371 (CN); WANG, Peipei, Nantong, Jiangsu 226371 (CN)
(74) Representative: Winter, Brandl - Partnerschaft mbB
(86) International application number: PCT/CN2022/085606
(87) International publication number: WO 2023/000714

(56) References cited:
- CN-A- 102 756 875
- CN-A- 109 911 429
- CN-U- 202 518 681
- CN-U- 206 395 222
- CN-U- 206 395 222
- CN-U- 209 777 272
- CN-U- 212 075 161
- CN-U- 212 584 208
- CN-U- 215 157 681
- GB-A- 926 289
- US-A1- 2012 018 436

## Description

### FIELD OF THE INVENTION

This invention relates to the field of tank-type containers, specifically to a handrail linkage assembly for tank-type container.

### BACKGROUND OF THE INVENTION

The existing setting of a limit for tank-type container handrail linkage shaft is as follows: a connecting shaft is connected to a top side frame through a connecting plate, a shaft sleeve is fitted on the connecting shaft, a handrail linkage is welded on the shaft sleeve, and the shaft sleeve is limited by a retaining ring and a cotter pin, both of which are fitted on the connecting shaft.

The existing technology is limited at the end of the connecting shaft, at this time there are the following problems : the length of the connecting shaft needs to be as short as possible. The total length of the connecting plate and connecting shaft is at least 90mm in existing technology. Therefore, in designing the gangway, considering the space occupied by the connecting shaft, the distance between the gangway and the top side frame is greater than 90mm, making the space occupied by the handrail assembly larger. When the handrail assembly is laid flat, the drawstring on the handrail may be hooked by the cotter pin, affecting the opening of the handrail assembly and making it inconvenient to use. Document CN 206 395 222 U discloses a handrail linkage according to the preamble of claim 1.

### BRIEF DESCRIPTION OF THE INVENTION

The purpose of this invention is to provide a handrail linkage assembly for tank-type container to solve the problems mentioned in the background.

In order to realize the above purpose, this invention provides a handrail linkage assembly for tank-type container as defined by claim 1, which is provided between a top side frame and a gangway plate, wherein the handrail linkage assembly comprises a connecting plate welded on the top side frame, a connecting shaft is welded on the connecting plate ,the connecting shaft is provided longitudinally , the top outer side of the connecting shaft is covered with a shaft sleeve, a handrail linkage is welded on the shaft sleeve, a groove is provided in the circumferential direction at the position where the connecting shaft contacts the shaft sleeve, that is, the groove is provided on the outer circumferential surface of the connecting shaft, a hole is opened on the shaft sleeve, and a limit pin is welded inside the hole, one end of the limit pin is inserted into the groove, and the other end is located outside the shaft sleeve.

Further improvements of the invention, the groove is a 90° arc groove.

Further improvements of the invention, the limit pin can move within the groove.

Further improvements of the invention, the distance between the top side frame and the gangway plate only needs to be more than 75mm.

Compared with the existing technology, the beneficial effects of this invention are: this invention can reduce the space occupied by the handrail assembly and has eliminated the cotter pin in the structure, solving the problem of the drawstring on the handrail possibly being hooked by the cotter pin.

### BRIEF DESCRIPTION OF THE DRAWINGS

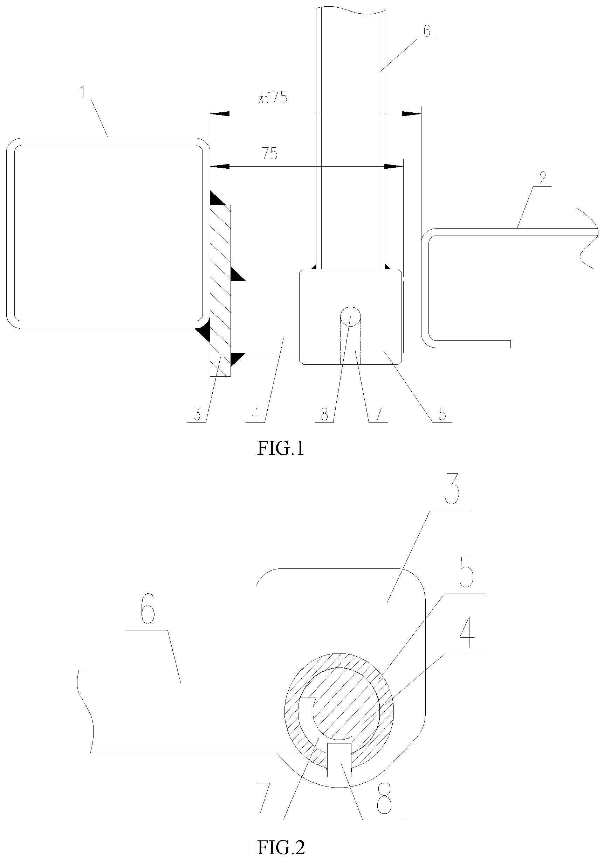

Figure 1 is a usage state diagram of this invention;
Figure 2 is a schematic diagram of the structure of the handrail linkage when laid flat in this invention;

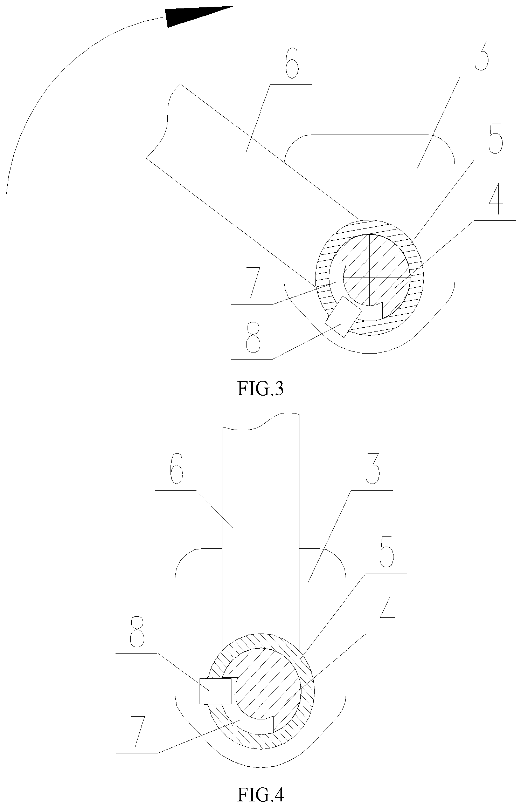

Figure 3 is a motion state diagram of the handrail linkage when opened in this invention;
Figure 4 is a schematic diagram of the structure of the handrail linkage when fully opened in this invention;

### DETAILED DESCRIPTION

In the following, the technical solutions in the embodiments of this invention will be clearly and completely described in conjunction with the accompanying drawings in the embodiments of the invention. Obviously, the described embodiments are only a part of the embodiments of this invention, not all of them. Based on the embodiments in this invention, all other embodiments obtained by those skilled in the art without creative work fall within the protection scope of this invention.

It should be noted that, where possible without conflict, the embodiments and features of the embodiments in this application can be combined with each other. The invention will be further described in detail with reference to the drawings and in conjunction with the embodiments.

This embodiment provides a handrail linkage assembly for a tank-type container, the handrail linkage assembly is provided between a top side frame 1 and a gangway plate 2. The handrail linkage assembly specifically comprises a connecting plate 3 welded on the top side frame 1, a connecting shaft 4 which is provided longitudinally is welded on the connecting plate 3, the top outer side of the connecting shaft 4 is covered with a shaft sleeve 5, and a handrail linkage 6 is welded on the shaft sleeve 5. A groove 7 is provided in the circumferential direction at a position where the connecting shaft 4 contacts the shaft sleeve 5, that is, the groove 7 is provided on the outer circumferential surface of the connecting shaft 4. A hole is opened on the shaft sleeve 5, and a limit pin 8 is welded inside the hole, one end of the limit pin 8 is inserted into the groove 7, and the other end is located outside the shaft sleeve 5. This invention can reduce the space occupied by handrail linkage assembly and solves the problem of a drawstring on the handrail possibly being hooked by a cotter pin.

The groove 7 is a 90° arc groove, the arc groove is 9mm wide and 5mm deep; the diameter of the hole opened on the shaft sleeve 5 is 9mm, and the diameter of the limit pin 8 welded in the hole is 8mm. The limit pin 8 can move within the groove 7, satisfying the rotation of the linkage and realizing the limiting function. The total length of the connecting plate and connecting shaft can be shortened to 75mm, and the distance between the gangway plate and the top side frame only needs to be more than 75mm , the space is reduced and allowing more flexibility in the setting of the gangway.

It should be noted that the terminology used here is for the purpose of describing particular embodiments only and is not intended to limit the invention. As used here, unless the context clearly indicates otherwise, the singular forms are intended to comprise the plural forms as well. Furthermore, it should be understood that when the terms "comprises" and/or "comprising" are used in this specification, they specify the presence of stated features, steps, operations, devices, components, and/or combinations thereof.

The terms "first," "second," and the like in the description and in the claims of this application, as well as in the above drawings, are used to distinguish similar objects and are not necessarily used to describe a specific sequential or chronological order. It should be understood that the terms used in this manner can be interchanged under appropriate circumstances such that the embodiments of the application described herein can be performed in other than the sequence described or illustrated herein. Moreover, the terms "comprises," "having," and their derivatives are intended to cover non-exclusive inclusions. For example, a process, product, or apparatus that comprises a list of elements is not necessarily limited to only those elements but may comprise other elements not expressly listed or inherent to such process, product, or apparatus.

For convenience of description, spatially relative terms may be used herein, such as "above," "above," "upper surface," "on top of," and the like, to describe one device or feature's relationship to another device or feature as illustrated in the figures. It should be understood that the use of spatially relative terms is intended to encompass different orientations of the device in use or operation in addition to the orientation depicted in the figures. For example, if the device in the figures is turned over, devices described as "above other devices or features" would then be oriented "below the other devices or features." Therefore, the exemplary term "above" can comprise both "above" and "below" orientations. The device may be oriented in different ways (rotated 90 degrees or at other orientations) and accordingly, the spatially relative descriptors used herein should be interpreted accordingly.

Now, the exemplary embodiments will be described more fully with reference to the accompanying drawings. However, these exemplary embodiments may be embodied in many different forms and should not be construed as limited to the embodiments set forth herein. It should be understood that these embodiments are provided so that this disclosure will be thorough and complete, and will fully convey the scope of the utility model to those skilled in the art. In the drawings, the thickness of layers and regions may be exaggerated for clarity, and the same reference numerals will be used to represent the same items throughout the drawings, therefore they will be omitted from the description.

Although the embodiments of the invention have been shown and described, it will be understood by those skilled in the art that various changes, modifications, substitutions, and variations can be made in these embodiments without departing from the scope which is defined by the attached claims.

## Claims

1. A handrail linkage assembly for tank-type container , provided between a top side frame (1) and a gangway plate (2), **characterized in that**: the handrail linkage assembly comprises a connecting plate (3) welded on the top side frame (1), a connecting shaft (4) is welded on the connecting plate (3),the connecting shaft is provided longitudinally , the top outer side of the connecting shaft (4) is covered with a shaft sleeve (5), a handrail linkage (6) is welded on the shaft sleeve (5), a groove (7) is provided in the circumferential direction at the position where the connecting shaft (4) contacts the shaft sleeve (5), that is, the groove (7) is provided on the outer circumferential surface of the connecting shaft (4), a hole is opened on the shaft sleeve (5), and a limit pin (8) is welded inside the hole, one end of the limit pin (8) is inserted into the groove (7), and the other end is located outside the shaft sleeve (5).

2. The handrail linkage assembly for tank-type container according to claim 1, **characterized in that** , the groove (7) is a 90° arc groove.

3. The handrail linkage assembly for tank-type container according to claim 1, **characterized in that** , the limit pin (8) can move within the groove (7).

4. The handrail linkage assembly for tank-type container according to claim 1, **characterized in that**, the distance between the top side frame (1) and the gangway plate (2) only needs to be more than 75mm.

## Patentansprüche

1. Handlaufverbindungsanordnung für einen Tankcontainer, die zwischen einem oberen Seitenrahmen (1) und einer Laufstegplatte (2) angeordnet ist, **dadurch gekennzeichnet, dass** die Handlaufverbindungsanordnung Folgendes aufweist: eine Verbindungsplatte (3), die an den oberen Seitenrahmen (1) geschweißt ist, wobei ein Verbindungsschaft (4) an die Verbindungsplatte (3) geschweißt ist, wobei der Verbindungsschaft in Längsrichtung vorgesehen ist, wobei die obere Außenseite des Verbindungsschafts (4) mit einer Schafthülse (5) bedeckt ist, wobei ein Handlaufgestänge (6) an die Schafthülse (5) geschweißt ist, wobei eine Nut (7) in Umfangsrichtung an der Position vorgesehen ist, an der der Verbindungsschaft (4) die Schafthülse (5) berührt, derart, dass die Nut (7) an der Außenumfangsfläche des Verbindungsschafts (4) vorgesehen ist, wobei ein Loch an der Schafthülse (5) geöffnet ist und ein Begrenzungsstift (8) innerhalb des Lochs angeschweißt ist, wobei ein Ende des Begrenzungsstifts (8) in die Nut (7) eingesetzt ist und das andere Ende außerhalb der Schafthülse (5) angeordnet ist.

2. Handlaufverbindungsanordnung für einen Tankcontainer nach Anspruch 1, **dadurch gekennzeichnet, dass** die Nut (7) eine 90°-Bogen-Nut ist.

3. Handlaufverbindungsanordnung für einen Tankcontainer nach Anspruch 1, **dadurch gekennzeichnet, dass** der Begrenzungsstift (8) sich innerhalb der Nut (7) bewegen kann.

4. Handlaufverbindungsanordnung für einen Tankcontainer nach Anspruch 1, **dadurch gekennzeichnet, dass** der Abstand zwischen dem oberen Seitenrahmen (1) und der Laufstegplatte (2) nur mehr als 75mm betragen muss.

## Revendications

1. Ensemble de liaison de main courante pour conteneur de type réservoir, prévu entre un cadre latéral supérieur (1) et une plaque de passerelle (2), **caractérisé en ce que** : l'ensemble de liaison de main courante comprend une plaque de liaison (3) soudée sur le cadre latéral supérieur (1), un arbre de liaison (4) est soudé sur la plaque de liaison (3), l'arbre de liaison est prévu longitudinalement, le côté extérieur supérieur de l'arbre de liaison (4) est recouvert d'un manchon d'arbre (5), une liaison de main courante (6) est soudée sur le manchon d'arbre (5), une rainure (7) est prévue dans la direction circonférentielle à la position où l'arbre de liaison (4) entre en contact avec le manchon d'arbre (5), c'est-à-dire que la rainure (7) est prévue sur la surface circonférentielle extérieure de l'arbre de liaison (4), un trou est ouvert sur le manchon d'arbre (5), et une goupille de butée (8) est soudée à l'intérieur du trou, une extrémité de la goupille de butée (8) est insérée dans la rainure (7), et l'autre extrémité est située à l'extérieur du manchon d'arbre (5).

2. Ensemble de liaison de main courante pour conteneur de type réservoir selon la revendication 1, **caractérisé en ce que** la rainure (7) est une rainure en arc de 90°.

3. Ensemble de liaison de main courante pour conteneur de type réservoir selon la revendication 1, **caractérisé en ce que** la goupille de butée (8) peut se déplacer à l'intérieur de la rainure (7).

4. Ensemble de liaison de main courante pour conteneur de type réservoir selon la revendication 1, **caractérisé en ce que** la distance entre le cadre latéral supérieur (1) et la plaque de passerelle (2) doit uniquement être supérieure à 75 mm.
